# EUROPEAN PATENT SPECIFICATION

(11) **EP 3 581 353 B1**
(45) Date of publication and mention of the grant of the patent: **06.04.2022**
(21) Application number: 18750782.7
(22) Date of filing: 07.02.2018
(51) Int. Cl.: C08J 5/04, B29B 11/16, B29K 101/10, B29K 105/08, B29K 105/12

(54) **FIBER REINFORCED RESIN SHEET**
FASERVERSTÄRKTE HARZFOLIE
FEUILLE DE RÉSINE RENFORCÉE PAR DES FIBRES

(30) Priority: 09.02.2017 JP 2017021927
(43) Date of publication of application: 18.12.2019
(73) Proprietor: Toray Industries, Inc., Tokyo 103-8666 (JP)
(72) Inventor: HASHIMOTO, Masahiro, Aichi 455-8502 (JP); YAMASAKI, Masaaki, Shiga 520-8558 (JP); TSUMURA, Yusuke, Aichi 455-8502 (JP)
(74) Representative: Hoefer & Partner Patentanwälte mbB
(86) International application number: PCT/JP2018/004229
(87) International publication number: WO 2018/147331

(56) References cited:
- WO-A1-2007/020910
- WO-A1-2008/149615
- WO-A1-2016/006543
- JP-A- H07 228 715
- JP-A- 2009 274 412
- JP-A- 2013 202 969
- JP-A- 2013 221 040

## Description

### Technical Field of the Invention

Our invention relates to a fiber-reinforced resin sheet to be subjected to a press forming. Our invention specifically relates to a fiber-reinforced resin sheet applicable to products such as automobile structural members, aircraft members and sport tools, which are excellent in uniformity of basis weight as a forming material allowing dense filling into a mold, and enables obtaining a shaped product that has excellent mechanical characteristics because of increased volume content of the reinforcing fibers.

### Background Art of the Invention

The SMC (Sheet Molding Compound) which contains thermosetting resin with discontinuous reinforcing fibers has been used widely as industrial materials. A popular forming method is a press forming to form a predetermined shape by heating the SMC with a heater or in a mold to melt a resin component constituting a prepreg and then compressing it in a mold adjusted to a temperature suitable for inducing a curing reaction of thermosetting resin. Many studies have been conducted to enhance mechanical characteristics of shaped products with satisfactory material shape followability for such a kind of material.

The SMC may be produced by two-dimensionally dispersing reinforcing fiber yarns cut into a predetermined length to make a reinforcing fiber base material to be impregnated with melted softened resin. This method is called the melt impregnation method known as available for mass production at low cost. Patent document 1 discloses a method to restrict the number of reinforcing fiber single yarns contained in the bundle of reinforcing fibers to enhance mechanical characteristics of SMC shaped products by using this method. When the bundle of reinforcing fibers has a thin width, the bundle of reinforcing fibers is densely filled inside the reinforcing fiber base material so that a high fiber content of SMC is achieved together with enhanced mechanical characteristics of shaped product.

However, when the reinforcing fiber base material has an increased basis weight suitable for thick shaped product, the reinforcing fiber base material in which reinforcing fiber bundles are densely disposed might have unimpregnated sites because resin becomes difficult to be led inside the fiber bundle. The unimpregnated sites might remain as voids in shaped products even after compression forming of SMC to deteriorate quality of shaped products.

Patent documents 2 and 3 disclose a method to prepare a sheet-like SMC by bonding prepreg pieces chopped into a predetermined size and dispersed two-dimensionally, wherein the prepreg is a precursor of unidirectionally-oriented reinforcing fiber yarns impregnated with thermosetting resin. In this case, mechanical characteristics of SMC are controlled by adjusting content of reinforcing fibers in the prepreg as a precursor. Even when the prepreg has a high fiber content in this configuration, impregnation of fiber bundle with resin can easily be performed because reinforcing fiber yarns oriented at the time of producing prepregs have a uniform basis weight. Such characteristics would be effective to reinforce shaped products if unimpregnated fiber bundles with resin are reduced to decrease voids in shaped products.

However, when the prepregs chopped into a predetermined size are dispersed to form a sheet, some prepregs might be stabilized in formation as being tucked with chopped pieces or chopped pieces of prepreg might be bonded with adhesiveness of resin component in the prepreg. Such chopped pieces dispersed to make an SMC might have uneven local basis weight. Thus, the SMC sheet has variational thickness varying depending on sites so that it is difficult to give a uniform surface pressure applied to material in the mold for producing SMC shaped products. Consequently, surface appearance might deteriorate at a site having insufficient compression and shaped products might have a strength deteriorated by crimping insufficiently inside shaped products.

Patent document 4 discloses a fiber reinforced resin sheet, in which chopped prepregs made by chopping a prepreg of reinforcing fibers impregnated with a thermoplastic resin are dispersed two-dimensionally and are thermally bonded to each other.

### Prior art documents

### Patent documents

Patent document 1: JP2016-155912-A
Patent document 2: US2011/0011975
Patent document 3: WO2008/149615
Patent document 4: WO2016/006543

### Summary of the Invention

### Problems to be solved by the Invention

To solve the above-described problems, it could be helpful to provide a fiber reinforced resin sheet, in which fiber bundles are fully impregnated with resin even when the reinforcing fiber content is high while the basis weight is so uniform that the mold is densely filled with the forming material to easily remove voids in shaped products.

### Means for solving the Problems

To solve the above-described problems, our invention is a fiber reinforced resin sheet, in which chopped prepregs made by chopping a prepreg of reinforcing fibers impregnated with a thermosetting resin having a cure extent of 3% or more and less than 50% are dispersed two-dimensionally and are thermally bonded to each other.

In our fiber reinforced resin sheet, it is preferable that the reinforcing fibers are oriented in a fiber orientation direction of the chopped prepreg.

In our fiber reinforced resin sheet, it is preferable that the reinforcing fibers increase continuously toward a center from both ends in the fiber orientation direction in a transition section.

In our fiber reinforced resin sheet, it is preferable that the chopped prepreg has a shape to chop the prepreg at an angle of 2 to 30° from the fiber orientation direction.

In our fiber reinforced resin sheet, it is preferable that the reinforcing fibers contained in the chopped prepreg have a number average fiber length of 5 mm or more and less than 100 mm.

In our fiber reinforced resin sheet, it is preferable that the chopped prepregs are randomly disposed in a plane.

In our fiber reinforced resin sheet, it is preferable that the chopped prepreg has 20 to 400 of a ratio (W/t) of a maximum width (W) to a maximum thickness (t).

In our fiber reinforced resin sheet, it is preferable that a tensile strength is 0.1 MPa or more.

In our fiber reinforced resin sheet, it is preferable that a surface layer is a resin layer having a thickness of 100 µm or more and less than 1,000 µm.

In our fiber reinforced resin sheet, it is preferable that the resin layer contains the thermosetting resin.

In our fiber reinforced resin sheet, it is preferable that an average basis weight is 1,000 g/m or more and less than 4,000 g/m².

In our fiber reinforced resin sheet, it is preferable that a minimum basis weight is 40% or more and less than 100% relative to the average basis weight.

In our fiber reinforced resin sheet, it is preferable that the prepreg is a cut-out remnant piece left after cutting shaped products out of a sheet-like prepreg or a recycled material which does not meet a quality standard when the resin of the prepreg is cured.

### Effect according to the Invention

Our invention can make it possible to provide a fiber reinforced resin sheet, in which fiber bundles are fully impregnated with resin even when the reinforcing fiber content is high while the basis weight is so uniform that the mold is densely filled with the forming material to easily remove voids in shaped products.

### Brief explanation of the drawings

[Fig. 1] Fig. 1 is a schematic plan view showing an example of our chopped prepreg.
[Fig. 2] Fig. 2 is a schematic plan view showing another example of our chopped prepreg.
[Fig. 3] Fig. 3 is a schematic plan view showing yet another example of our chopped prepreg.

### Embodiments for carrying out the Invention

Our invention is a fiber reinforced resin sheet, in which chopped prepregs made by chopping a prepreg of reinforcing fibers impregnated with a thermosetting resin having a cure extent of 3% or more and less than 50% are dispersed two-dimensionally and are thermally bonded to each other.

Hereinafter, examples of our invention will be explained in details.

A sheet-like forming material, generally called SMC (Sheet Molding Compound) made by dispersing reinforcing fiber yarns impregnated with thermosetting resin is suitable for producing shaped product having few voids because a sheet-like forming material well impregnated with resin can easily be prepared.

On the other hand, the SMC made by dispersing prepregs to form a sheet might have prepregs folded or bonded to make a three-dimensional aggregate. Since such an aggregate having uneven thickness of SMC depending on sites, it becomes difficult for material inside the mold to gives uniform surface pressure weight. That can be a factor of decreasing strength of shaped products because of insufficient crimping inside shaped products as well as deteriorating surface appearance at a site with insufficient compression. Further, prepregs have flexibility derived from thermosetting resin which is not yet cured. Therefore, a single prepreg might have a stabilized shape with a tuck. In this case, tucked reinforcing fibers may have a poor reinforcement effect to deteriorate mechanical characteristics of SMC shaped products.

To solve the above-described problems, our reinforced resin sheet is a fiber reinforced resin sheet, in which chopped prepregs made by chopping a prepreg of reinforcing fibers impregnated with a thermosetting resin having a cure extent of 3% or more and less than 50% are dispersed two-dimensionally and are thermally bonded to each other.

When the thermosetting resin has a cure extent within this range, the chopped prepreg can be reduced in adhesiveness so that frequency of forming aggregates of chopped prepregs is minimized in a process of dispersing the chopped prepregs into a sheet. Further, the cure extent within the range can increase the stiffness of uncured thermosetting resin. Such chopped prepregs exhibit moderate rigidity to suppress the frequency of forming the tuck in a single chopped prepreg. Thus, mechanical characteristics of shaped product can be enhanced effectively by excluding chopped prepregs with a tuck having a poor reinforcement efficiency.

In our fiber reinforced resin sheet, it is preferable that the number of chopped prepregs with a tuck is less than 200 per 1m² of outermost sheet surface. It is more preferably less than 100 and is further preferably less than 50. The number of chopped prepregs with a tuck can be counted by observing the surface of fiber reinforced resin sheet.

Our chopped prepreg may be produced by chopping a prepreg. The said prepreg means a sheet of reinforcing fibers impregnated with thermosetting resin. To adjust the cure extent of thermosetting resin contained in the chopped prepreg within a predetermined range, it is preferable that a prepreg is subjected to the adjustment of the cure extent of thermosetting resin. With such an adjustment, adhesiveness of prepreg is suppressed to exhibit desirable characteristics of our fiber reinforced resin sheet in processes to chop the prepreg to prepare chopped prepregs and to disperse the chopped prepregs into a sheet. To adjust the cure extent of thermosetting resin contained in the prepreg, the prepreg may be subjected to a heat treatment. It is preferable that the prepreg is heated in an oven adjusted to a predetermined temperature, although the heat treatment is not limited thereto in particular. Such a preferable method can be applied to a single sheet-like prepreg, or to a roll-like prepreg wrapped on a support pipe. When the prepreg roll is heated, productivity is excellent because of great amount of prepreg to be treated per unit time. It is easily applicable to a running prepreg that the prepreg is heated with an infrared heater. Therefore, such a heat treatment is preferable from a viewpoint of economy because it can easily be incorporated to a production process of prepreg. When the reinforcing fiber of prepreg is a conductive fiber, it is preferable that the heat treatment is a dielectric heating. Since the dielectric heating can utilize heat generated by electromagnetic induction of conductive fiber can be given uniform thermal distribution capable of precisely adjusting the cure extent of prepreg.

In our fiber reinforced resin sheet, it is important that the chopped prepreg has a desirably-adjusted cure extent while each chopped prepreg has a predetermined range of cure extent, from a viewpoint of enhanced process passability in a dispersing process of chopped prepreg. Specifically, it is preferable that each chopped prepreg has a coefficient of variance for the cure extent of less than 30%. It is more preferably less than 20% and is further preferably less than 10%. The lower limit of the coefficient of variance may generally be 0.5%, although it is not limited thereto in particular.

The cure extent of chopped prepreg is calculated by the formula of "Cure extent [%]= (Qp-Qc) /Qp x 100", where Qp [J/g] indicates a cure calorific value of prepreg just after the production and Qc [J/g] indicates a residual calorific value of heat treated chopped prepreg. Coefficient of variance (CV) of the cure extent of chopped prepreg is calculated by the formula of "CV [%} = Kv/Kave x 100", where Kv indicates a standard deviation of cure extent for 20 samples (i=1, 2,...20) of chopped prepreg and Kave indicates the average thereof.

The condition of heat treatment of prepreg as a precursor may be changed properly to decrease the variance of cure extent of each chopped prepreg. Particularly, when a prepreg having a thickness increased by laminating or wrapping into a roll is subjected to a heat treatment, temperatures tend to vary greatly inside the prepreg. It is preferable that the prepreg is subjected to a heat treatment at a temperature of less than 100°C. It is more preferably less than 80°C, and is further preferably less than 60°C. The treatment temperature of 100°C or more might make the thermosetting resin contained in the prepreg exhibit a severe cure reaction. In this case the prepreg has a high cure extent locally and it is difficult to suppress variance of cure extent desirably. From a viewpoint of shortened treatment time, it is preferable that the lower limit of heat treatment temperature is 30°C, although it is not limited thereto in particular.

To enhance mechanical characteristics of shaped products, it is preferable that the reinforcing fiber is contained by a high volume content. It is preferable that the chopped prepreg contains the reinforcing fiber by a volume content of 40% or more, and is more preferably 50% or more, and is further preferably 55% or more.

Our chopped prepreg can utilize the prepreg as a precursor. To produce prepregs, it is generally preferable to employ a melt impregnation method in which melted resin is led into a sheet-like reinforcing fiber bundle of which reinforcing fibers are drawn to be widened. With this method, because reinforcing fiber bundles having a predetermined thickness can be impregnated with resin by a compression to have little uneven impregnation, a good resin impregnation can be performed easily even when fibers are contained by a high volume content. With such a prepreg, our fiber reinforced resin sheet can maintain desirable characteristics such as good impregnation, so that shaped products made from our fiber reinforced resin sheet has voids reduced. The upper limit of the volume content of reinforcing fiber may be around 7% corresponding to a case of almost closest packing of reinforcing fiber in the prepreg.

In the chopped prepreg of our fiber reinforced resin sheet, it is preferable that the reinforcing fiber is fully impregnated with thermosetting resin. The impregnation extent is determined as follows. Reinforcing fibers are separated with a tweezer from 10g of chopped prepreg. It is possible to separate fiber bundles containing 10 to 30 pieces of reinforcing fiber when single yarns of reinforcing fiber can hardly be separated. Next, the side face of single yarn or bundle of reinforcing fiber is observed with a microscope to determine the presence of attached resin. Attached resin of 70% or more of side area corresponds to the evaluation of full impregnation.

Our fiber reinforced resin sheet comprises a thermosetting resin such as epoxy resin, unsaturated polyester resin, vinyl ester resin, phenolic resin, epoxy acrylate resin, urethane acrylate resin, phenoxy resin, alkyd resin, urethane resin, maleimide resin and cyanate resin. It is preferable that it comprises an epoxy resin, so that mechanical characteristics are high, and the cure extent can easily be adjusted by heat treatment.

Our fiber reinforced resin sheet is characterized in that chopped prepregs constituting the fiber reinforced resin sheet are thermally bonded to each other. Our fiber reinforced resin sheet can be chopped into each shape and laminated appropriately to help to follow a predetermined shape. Such characteristics enable easy handling ability of materials in a forming process to enhance uniform quality of produced members.

To thermally bond chopped prepregs contained in the fiber reinforced resin sheet, the chopped prepregs may be heated after being dispersed two-dimensionally. In this case, the chopped prepreg which has lost adhesiveness at room temperature (23°C) because of cure extent adjusted to a predetermined value is heated to induce the adhesiveness of thermosetting resin, so that the chopped prepregs can be fixed with a component of thermosetting resin. The bonding degree may be appropriately adjusted by pressurizing in addition to heating.

To determine the bonding force between chopped prepregs, fiber reinforced resin sheet may be subjected to a tensile test to check the tensile strength in the relation between stress and strain. It is preferable that the tensile strength is 0.1 MPa or more. It is more preferably 0.2 MPa or more and is further preferably 0.5 MPa. The upper limit of the tensile strength may generally be 10 MPa, although it is not limited thereto in particular. Such a fiber reinforced resin sheet can prevent chopped prepreg from detaching during chopping and conveying the fiber reinforced resin sheet.

This characteristic of chopped prepregs bonded to each other relates to an advantage to produce a sheet having extremely small variance of basis weight at each site of the fiber reinforced resin sheet. It is preferable that the minimum basis weight of each site of the fiber reinforced resin sheet is 40% or more and less than 100% relative to an average basis weight. It is more preferably 80% or more and less than 100% and is further preferably 90% or more and less than 100%.

Our fiber reinforced resin sheet can maintain a low variance of basis weight even when the basis weight of sheet is increased to follow a thick member. To exhibit this characteristic desirably, it is preferable that the average basis weight of the fiber reinforced resin sheet is 1,000 g/m² or more and less than 4,000 g/m². It is more preferably 1,500 g/m² or more and less than 3,500 g/m² and is further preferably 2,000 g/m² or more and less than 3,300 g/m².

It is preferable that the minimum basis weight determined at any site of the fiber reinforced resin sheet is 40% or more and less than 100% relative to the average basis weight. The minimum basis weight within this range, which corresponds to a small variance of basis weight of fiber reinforced resin sheet, can effectively reduce void volume fraction of shaped product because of close filling of material in the mold for the fiber reinforced resin sheet.

The chopped prepreg can be prepared by chopping various forms of prepreg into a predetermined size. The prepreg should have a sheet-like shape and may be a prepreg consisting of continuous reinforcing fibers or a prepreg consisting of discontinuous reinforcing fibers. The prepreg consisting of continuous reinforcing fiber may be a unidirectional prepreg in which reinforcing fibers are unidirectionally oriented, a woven fabric prepreg having a structure consisting of woven reinforcing fibers, or a prepreg of Non Crimp Fabric (NCF) impregnated with resin. The prepreg consisting of discontinuous reinforcing fibers may be a Sheet Molding Compound (SMC) of chopped reinforcing fibers containing resin or a Bulk Molding Compound (BMC) in which single yarns of reinforcing fibers or thin bundles of reinforcing fibers are dispersed in resin. It is preferable to employ a prepreg consisting of continuous reinforcing fibers as a precursor so that the fiber content can easily be increased to give excellent mechanical characteristics to our fiber reinforced resin sheet.

It is preferable that the fiber reinforced resin sheet comprises unidirectionally-oriented reinforcing fibers contained in the chopped prepreg. The ratio of reinforcing fiber to resin component contained in the chopped prepreg greatly affects mechanical characteristics of fiber reinforced resin sheet. The embodiment of unidirectionally-oriented reinforcing fibers enables a dense filling of reinforcing fibers to enhance mechanical characteristics of fiber reinforced resin sheet. To prepare such a chopped prepreg efficiently, it is preferable that the prepreg as a precursor is a unidirectionally-oriented prepreg.

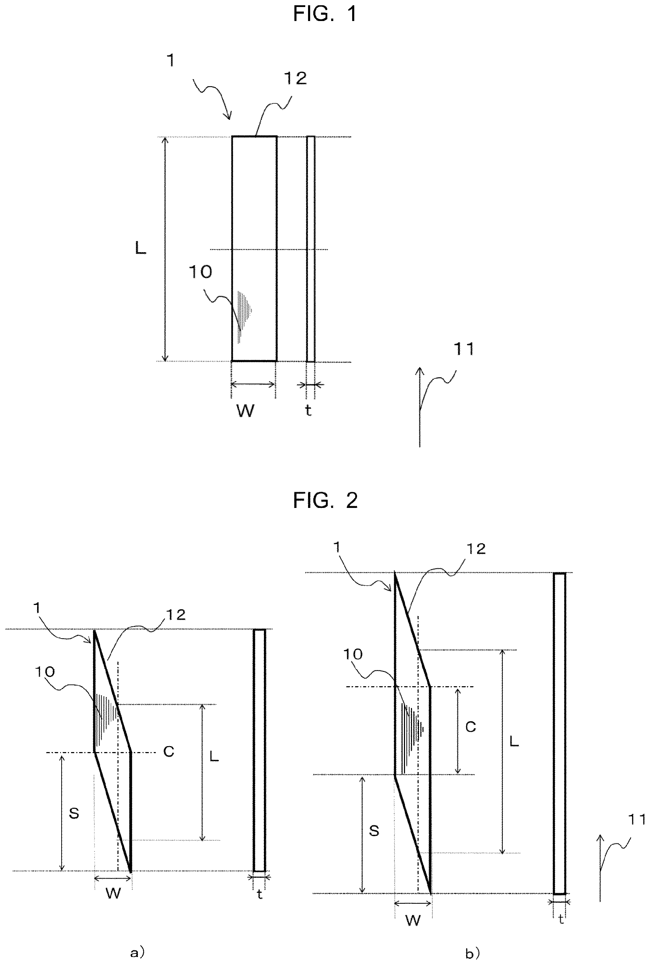

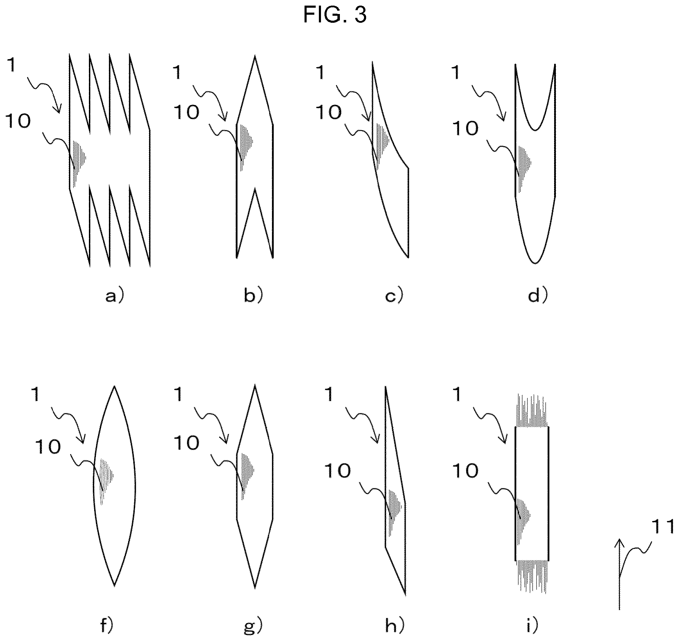

Our fiber reinforced resin sheet having a desirable shape of chopped prepreg can enhance mechanical characteristics of shaped products. As shown in Fig. 2, it is preferable that the chopped prepreg 1 in the fiber-reinforced resin sheet has transition section S in which the number of reinforcing fibers increase continuously toward center C from both ends 12 in fiber direction 11. In other words, it is preferable that the number of reinforcing fibers decreases continuously from center C of chopped prepreg having the most reinforcing fibers toward both ends 12 in transition section 5. In our chopped prepreg, end 12 in fiber direction of chopped prepreg means one or more points or lines having a position furthest in fiber direction of chopped prepreg 1. Specifically, it means an end of reinforcing fiber 10, or an aggregate thereof. Center C in fiber direction of chopped prepreg means a section having the maximum width (maximum number of reinforcing fibers) in the chopped prepreg. In other words, transition section S in which the number of reinforcing fibers increase continuously covers chopped prepreg 1 other than center C having the maximum width. Fig. 3 shows several examples of chopped prepreg 1 having a transition section.

Thus the number of reinforcing fibers are continuously changed in chopped prepreg 1 to disperse the load which becomes maximum at center C of chopped prepreg 1 and is applied to chopped prepreg 1 gradually toward end 12 of chopped prepreg 1 from end 12 of reinforcing fiber 10 existing continuously, so that stress concentration is prevented and strength of reinforcing fiber is easily reflected in strength of shaped products. In this specification, said "existing continuously" means that there are two or more sites changing the number of reinforcing fibers in transition section S and the total area of cross sections of reinforcing fiber 10 chopped at the same site as said two or more sites (where the change of the number of reinforcing fibers has been determined) is 0.008mm² or less. From a viewpoint of smooth change of the number of reinforcing fibers to prevent stress concentration, it is preferable that the total area of cross sections of reinforcing fiber 10 chopped at the same site is 0.0022mm² or less. The stress concentration can be effectively suppressed when the change rate of total area of cross sections of reinforcing fiber 10 in transition section S is 0.05mm² or less per 1mm. It is preferable that the change rate per 1mm is 0.04mm² or less and is preferably 0.025mm² or less per 1mm. The total area of cross sections of reinforcing fiber means a sum of cross sections of each reinforcing fiber in the fiber width direction. Above-described chopped prepreg 1 having transition section S may have a configuration in which the number of reinforcing fibers continuously increases up to a predetermined value to be maintained for a while and then continuously decreases it, or alternatively a configuration in which the number of reinforcing fibers continuously increases and then continuously decreases without interposing constant value. It is preferable that the total area of cross sections of end of reinforcing fiber is 0.05mm² or less, wherein the total area per 1mm determined by scanning chopped prepreg 1 from end 12 to the other end contained in end of reinforcing fiber is calculated by summation in fiber direction. When the variance of cross section of reinforcing fiber 10 contained in chopped prepreg 1 is within ±10%, the summation is replaced by multiplying a representative area of cross section of reinforcing fiber 10 by the number of ends 12 of reinforcing fiber contained per 1mm. When chopped prepreg 1 has the maximum width of less than 3mm, the change rate of full width of chopped prepreg 1 is determined to calculate the change amount per 1mm by assuming a proportional relation.

In chopped prepreg 1 having transition section S, it is preferable that the decrease rate of the number of reinforcing fibers is 1,400 or less per 1mm of move in fiber direction 11, so that stress concentration can be prevented effectively. It is more preferably 1,000 or less per 1mm and is further preferably 600 or less per 1mm to improve in strength. When chopped prepreg 1 has the maximum width of less than 3mm, the change rate of full width of chopped prepreg 1 is determined to calculate the change amount per 1mm by assuming a proportional relation. In this case, it is preferable that there are two or more sites changing the number of reinforcing fibers in transition section S and the number of reinforcing fibers 10 chopped at the same site as said two or more sites (where the change of the number of reinforcing fibers has been determined) is 200 or less, preferably 50 or less.

It is preferable that the chopped prepreg constituting our fiber reinforced resin sheet has a shape in which end 12 of chopped prepreg 1 is provided obliquely to fiber direction 11. It is more preferable that end 12 of chopped prepreg 1 has a linear shape at an angle of 2 to 30° from the fiber direction. Such preferable chopped prepreg 1 can be prepared by pulling out a continuous unidirectional prepreg to be chopped linearly at an angle of 2 to 30° from fiber direction 11. When the angle between end 12 of chopped prepreg 1 and fiber direction 11 is a low angle of 30° or less specifically, shaped products can be strengthened. From viewpoints of handling of chopped prepreg 1 and stability depending on the angle between fiber direction 11 and the chopping blade, it is preferably 2° or more. It is more preferable that the angle between end 12 of chopped prepreg 1 and fiber direction 11 is 3 to 25°, further preferably 5 to 20° from viewpoints of balance between processability and highly strengthened shaped products.

Such a preferable chopped prepreg can be prepared by chopping a prepreg into a desired shape with a rotary cutter such as Guillotine cutter and roving cutter.

Although the longer reinforcing fiber in the chopped prepreg has the higher mechanical characteristics of shaped product made from fiber reinforced resin sheet, a long reinforcing fiber makes a bulk chopped prepreg so that handling of chopped prepreg is inferior in a production process of sheet. It is possible that the upper limit length of reinforcing fibers is set from a viewpoint of producing a fiber reinforced resin sheet excellent in quality with little variance of basis weight by using appropriate amount of chopped prepreg at each site of sheet. It is preferable that the reinforcing fibers contained in the chopped prepreg have a number average fiber length of 5 mm or more and less than 100 mm. It is more preferably 10 mm or more and less than 60 mm, and is further preferably 20mm or more and less than 50 mm. The fiber length can be determined by measuring a length of reinforcing fiber extracted by burning out resin component from a chopped prepreg placed under air environment in an electric furnace at 450°C for an hour. The number average fiber length is calculated by averaging lengths of randomly selected 400 pieces of the extracted reinforcing fibers measured by 1/10mm precision.

In our fiber reinforced resin sheet, it is preferable that the chopped prepregs are randomly disposed in a plane. Such a configuration makes an isotropic forming material easy to design. It is important that the chopped prepregs are randomly disposed uniformly in a plane direction because uneven distribution or uneven orientation of chopped prepreg might deteriorate mechanical characteristics, increase its variance, or generate warpage or sink for a thin shaped product.

It is preferable that the chopped prepreg has 20 to 400 of ratio (W/t) of maximum width W [mm] to maximum thickness t [mm]. When the flat ratio (W/t) is greater, the chopped prepreg is flatter so that strength is improved. As shown in Fig. 1, symbol W is the maximum width in the chopped prepreg scanned in fiber direction 11. As well, symbol t [mm] is the maximum thickness in the chopped prepreg scanned in fiber direction 11.

The reinforcing fiber constituting the chopped prepreg may be an organic fiber such as aramid fiber, polyethylene fiber and poly-p-phenylene benzoxazole (PBO) fiber, an inorganic fiber such as glass fiber, carbon fiber, silicon carbide fiber, alumina fiber, Tyranno fiber, basalt fiber and ceramics fiber, a metal fiber such as stainless steel fiber and steel fiber, a boron fiber, a natural fiber, a denatured natural fiber or the like. Above all, it is preferable to employ a carbon fiber suitable as a member such as automotive panel which should save weight because of its lightweight and excellence in specific strength and specific elastic modulus as well as thermal resistance and chemical resistance.

From viewpoints of balance among impact resistance, tensile strength and compressive strength, it is preferable that the carbon fiber has a tensile elastic modulus of 200 GPa or more although it is not limited thereto in particular. It is more preferably 200 to 600 GPa, and is further preferably 250 to 450 GPa. From a viewpoint of strength of carbon fiber, it is preferable that the carbon fiber has a tensile strength of 4.0 GPa or more to obtain a composite material having a mechanical characteristic such as high rigidity, high tensile strength and high compressive strength. It is more preferably 4.0 to 7.5 GPa, and is further preferably 5.0 to 7.0 GPa. The tensile elongation is also an important factor. It is preferable that the carbon fiber has a tensile elongation of 1.5% or more. Accordingly, it is most preferable that the carbon fiber has a tensile elastic modulus of 200 GPa or more, a tensile strength of 4.0 GPa or more and a tensile elongation of 1.5% or more.

The carbon fiber may be a marketed product (made by Toray Industries, Inc.) such as "Torayca (registered trademark) "T800G-24K, "Torayca (registered trademark)" T800S-24K, "Torayca (registered trademark)" T810G-24K, "Torayca (registered trademark)" T700G-24K, "Torayca (registered trademark)" T300-3K and "Torayca (registered trademark)" T700S-12K.

In our fiber reinforced resin sheet, it is preferable that a surface layer is a resin layer having a thickness of 100µm or more and less than 1,000µm. The thickness is more preferably 200µm or more and less than 500µm and is further preferable 250µm or more and less than 400µm. Such a configuration effectively suppresses a forming defect such as exposed reinforcing fibers on a shaped product surface and a surface cracking caused by insufficient resin, even when the chopped prepreg contains a high proportion of reinforcing fiber. It is possible that the resin layer is utilized as a component which auxiliarily helps bonding chopped prepregs to each other. In this case, because the resin component bridges a gap between chopped prepregs, the fiber reinforced resin sheet can prevent chopped prepregs from dropping off. Also, because the fiber reinforced resin sheet is provided with flexibility, the handling of the sheet can be improved. The resin layer may be utilized to adjust the tuck characteristics of fiber reinforced resin sheet. The tuck characteristics being adequate can make it easy to handle a laminate made by laminating fiber reinforced resin to fix a sheet between layers.

Further, to enhance characteristics of shaped product, it is possible to add an additive to the resin layer. From a viewpoint of enhanced impact resistance of shaped product made from our fiber reinforced resin sheet, it is possible to contain thermoplastic resin particles. To achieve a good adhesive strength to thermosetting resin, it is preferable that the thermoplastic resin is a polyamide such as nylon 12, nylon 6, nylon 11, nylon 66, nylon 6/12 copolymer and nylon (semi-IPN nylon) modified by the epoxy compound disclosed in JP-H01-104624-A into a semi-IPN (Interpenetrating Polymer Network structure) compound. From a viewpoint of enhanced conductivity of shaped product made from our fiber reinforced resin sheet, it is possible to contain carbon black, carbon nanotube, carbon particles or metal powder. To achieve the same effect, it is possible that the resin layer contains an embedded metal mesh made of copper or aluminum.

To assist adhesion between resin layer and chopped prepreg layer, it is preferable that the resin layer contains the same component as thermo setting resin contained in the chopped prepreg. It is possible to contain a coupling agent to the extent that the effect of our invention is not spoiled.

In our fiber reinforced resin sheet, it is preferable that the prepreg is a cut-out remnant piece or a recycled material. A sheet-like prepreg is repeatedly cut out for shaped products to leave a cut-out remnant piece of prepreg which cannot be cut out for shaped products any more. Our fiber reinforced resin sheet can be produced from such a cut-out remnant piece of prepreg. Further, when prepreg products are stored for a long time or at a high temperature, resin of the prepreg might be cured not to meet a quality standard. Such a prepreg cannot be used generally and is often thrown away. Our fiber reinforced resin sheet can utilize such a prepreg as a recycled material again. When our fiber reinforced resin sheet utilizes such a cut-out remnant piece or a recycled material, environmental load can be reduced while excellent economic efficiency can be achieved. It is possible that the cut-out remnant piece or the recycled material is a general prepreg roll, a slit tape chopped to adjust the prepreg width, a towpreg of fiber bundle containing resin, or a processed product made therefrom as a precursor.

### [Examples]

### <Measurement of void volume fraction of shaped product>

A shaped product made of reinforced resin sheet is cut along the thickness direction to polish the cross section to prepare an observation sample. The observation is performed by magnification of 200 times using an optical microscope. Voids inside the shaped product are observed with black images to be determined as a healthy part of the shaped product. Void volume fraction V is calculated by the formula "V [%]= Sb/Sa x 100", where Sa [mm²] indicates an observation area of shaped product and Sb [mm²] indicates an area of void. The observation is performed for 5 times with each area of 1mm x 1mm to calculate an average void volume fraction.

### <Measurement of basis weight of fiber reinforced resin sheet>

The fiber reinforced resin sheet is cut into each area of 5cm x 5cm to be weighed. The measurement of randomly selected cut pieces is performed for 50 times to calculate an average weight. The basis weight [g/cm²] is calculated as a weight per unit area.

### <Measurement of cure extent of chopped prepreg>

A chopped prepreg of 5mg is sampled from the fiber reinforced resin sheet and is subjected to differential scanning calorimetry (DSC) to calculate total calorific value Qc [J/g] by integrating the calorific peak in the calorific curve obtained at rate of temperature increase of 10°C/min from 30°C to 35°C. In the same manner, total calorific value Qp [J/g] for a prepreg as a precursor of the chopped prepreg is calculated. The cure extent of chopped prepreg in the fiber reinforced resin sheet is calculated by the formula "cure extent [%] = (Qp-Qc)/Qp x 100".

### <Measurement of average width and average thickness of chopped prepreg>

Average width Wm [mm] of chopped prepregs in the fiber reinforced resin sheet is determined as follows. Matrix resin is resolved by heating the fiber reinforced resin sheet for an hour in an electric furnace adjusted to 450°C to take out residual reinforcing fiber bundles with a tweezer. Next, each width of randomly selected 10 pieces of reinforcing fiber bundles is measured with a vernier caliper by 1/10mm precision at three parts of both ends and center in the fiber direction of a reinforcing fiber bundle. Average width Wm [mm] of chopped prepregs is calculated as an average width of the 10 pieces of reinforcing fiber bundles. Average thickness tm [mm] of chopped prepregs in the fiber reinforced resin sheet is determined as follows. Each thickness of the reinforcing fiber bundles of which average width Wm [mm] has been determined is measured with a vernier caliper by 1/100mm precision at three parts of both ends and center in the fiber direction of a reinforcing fiber bundle to calculate average value ta [mm] thereof. Assuming that resin is uniformly distributed in the chopped prepreg, average thickness tm [mm] is calculated by the formula "tm [mm] = ta/Vf", where Vf [- ] indicates a fiber volume fraction of chopped prepreg within 0 to 1.0.

### <Measurement of tensile characteristic of fiber reinforced resin sheet and shaped flat plate>

The sheet-like materials, prepared in Examples and Comparative examples, are cut into tensile strength test pieces having a size of 250±1mm in length and 25±0.2mm in width. The tensile strength is measured at room temperature according to a test method prescribed in JIS K-7073 (1998), in which gauge length is 150mm and crosshead speed is 2.0mm/min. To conduct the measurement, Instron (registered trademark) universal testing machine type-4208 is used. The tensile strength is calculated by averaging measured values of five test pieces (n=5). The tensile characteristic of shaped flat plate is measured in the same method as described above.

### (Example 1)

In a kneading device, after 20 parts by mass of "Sumi epoxy (registered trademark)" ELM434 (tetraglycidyldiaminodiphenylmethane, made by Sumitomo Chemical Co., Ltd.) and 80 parts by mass of "EPON (registered trademark)" 825 (bisphenol A-type epoxy resin, made by Momentive Specialty Chemicals Inc.) were kneaded, 21 parts by mass of "SUMIKAEXCEL (registered trademark)" PES5003P (polyether sulfone, made by Sumitomo Chemical Co., Ltd., weight average molecular weight: 47,000) was dissolved therein to be kneaded at 160°C, and then the epoxy resin composition was cooled down to 80°C and kneaded together with 69 parts by mass of 4,4'-DDS (4,4'-diaminodiphenylsulfone, made by Wakayama Seika Kogyo Co., Ltd.) to prepare epoxy resin composition (A).

The epoxy resin compound was applied by a knife coater to a mold release paper to prepare resin film (A). Next, two resin film sheets were laminated on both sides of unidirectionally-oriented sheet-like carbon fiber "Torayca (registered trademark)" T800S-24K-10E (24,000 pieces of fibers, tensile strength 5.9GPa, tensile elastic modulus 290GPa, tensile elongation 2.0%, total fineness 1.03 g/m, made by Toray Industries, Inc.) so that carbon fibers were impregnated with resin under heating and pressurizing condition to prepare a unidirectional prepreg having basis weight of 190 g/m² of carbon fiber, fiber volume fraction of 55% and width of 27mm.

The unidirectional prepreg wrapped a paper pipe having outer diameter of 20cm placed in a hot wind dryer adjusted to 60°C for 30 hours to adjust the cure extent of epoxy contained in the prepreg. The cure extent of the unidirectional prepreg of which cure extent was adjusted to was 15%. The unidirectional prepreg of which cure extent was adjusted was chopped with a rotary cutter provided with blades at angle of 90° and 25mm intervals in a circumferential direction so that chopped prepregs having fiber length of 25mm and a linear shape having an end crossing the fiber direction at 90° were prepared.

The chopped prepregs were dispersed onto an iron support stand provided at a height 50cm lower than the rotary cutter. The support stand was actuated at speed of 30cm/min as dispersing the prepregs to prepare a chopped prepreg base material having width of 30cm and length of 2m.

The chopped prepreg base material inserted to a double belt press to go through a heating section at 120°C and 0.1MPa of surface pressure applied to the sheet was cooled down in a cooling section at 20°C as maintaining the surface pressure so that a fiber reinforced resin sheet having width of 30cm and length of 2m was continuously produced. The fiber reinforced resin sheet had average basis weight of 712 g/m² and coefficient of variance of 16%. The chopped prepregs of the fiber reinforced resin sheet had average width Wm of 30.1mm, average thickness tm of 0.13mm, and ratio (Wm/tm) was 231. The tensile strength was 0.5MPa as a result of tensile test of fiber reinforced resin sheet.

Five sheets of fiber reinforced resin sheets cut into a size of 270 x 270mm were stacked in an almost central part on a flat plate mold having a size of 300 x 300mm with cavity, which was cured at 180°C for 2 hours while pressurized at 3MPa of pressure to produce a flat plate of shaped product having a size of 300 x 300mm.

In the processes of cutting and laminating the fiber reinforced resin sheet and conveying the laminate to the mold, the measured load could easily be charged in the mold without falling chopped prepregs off the fiber reinforced resin sheet. The fiber reinforced resin sheet was excellent in handling ability because of good bonding between chopped prepregs. The shaped product had no defect while a whole mold was filled with material. The shaped product had uniform luster on the surface while appearance was good without exposed reinforcing fiber caused by insufficient resin. According to observation of cross section, the shaped product had void volume fraction of 0.3% which is much lower than Comparative example 4. As a result of tensile test, the shaped product had tensile strength of 280MPa which is much improved by 30% or more from Comparative example 4. Our fiber reinforced resin sheet characterized in that chopped prepregs of which cure extent is appropriately adjusted are dispersed can prevent chopped prepregs from aggregating or from being tucked. It seems that such a characteristic decreases variance of basis weight of fiber reinforced resin sheet so that the forming material is uniformly pressurized in the mold to decrease the void volume fraction and improve the strength.

### (Example 2)

A fiber reinforced resin sheet was produced by the same method as Example 1, except that the unidirectional prepreg was placed in a hot wind dryer adjusted to 80°C for 20 hours to adjust the cure extent. The cure extent of unidirectional prepreg of which cure extent was adjusted to was 36%. From the unidirectional prepreg of which cure extent was adjusted, a fiber reinforced resin sheet was produced in the same method as Example 1 to form a flat plate of shaped product.

The fiber reinforced resin sheet had average basis weight of 691 g/m² and coefficient of variance of 18%. The chopped prepregs of the fiber reinforced resin sheet had average width Wm of 28.5mm, average thickness tm of 0.12mm, and ratio (Wm/tm) was 238. The tensile strength was 0.3MPa as a result of tensile test of fiber reinforced resin sheet.

In the processes of cutting and laminating the fiber reinforced resin sheet and conveying the laminate to the mold to produce the shaped product, the fiber reinforced resin sheet was excellent in handling ability without falling chopped prepregs off the sheet because of good bonding between chopped prepregs. According to observation inside the shaped product, the shaped product had low void volume fraction of 0.8% and high tensile strength of 250MPa.

### (Example 3)

A fiber reinforced resin sheet was produced by the same method as Example 1, except that the prepreg was chopped with a rotary cutter provided with blades at angle of 10° and 25mm intervals in a circumferential direction. The prepared chopped prepregs had a linear shape having an end crossing the fiber orientation direction of chopped prepreg at 20° while the reinforcing fibers had number average fiber length of 25mm although the lengths had variance around 3% among chopped prepregs. From the chopped prepreg, a fiber reinforced resin sheet was produced in the same method as Example 1 to form a flat plate of shaped product.

The fiber reinforced resin sheet had average basis weight of 669 g/m² and coefficient of variance of 25%. The chopped prepregs of the fiber reinforced resin sheet had average width Wm of 29.8mm, average thickness tm of 0.11mm, and ratio (Wm/tm) was 271. The tensile strength was 0.8MPa as a result of tensile test of fiber reinforced resin sheet.

In the processes of cutting and laminating the fiber reinforced resin sheet and conveying the laminate to the mold to produce the shaped product, the fiber reinforced resin sheet was excellent in handling ability without falling chopped prepregs off the sheet because of good bonding between chopped prepregs.

According to observation inside the shaped product, the shaped product had low void volume fraction of 0.5%. The shaped product had very high tensile strength of 350MPa. It seems that the stress concentration at the end is reduced to enhance the strength by chopping the end of prepreg obliquely from the fiber direction.

### (Example 4)

Epoxy resin composition (A) was kneaded together with 28 parts by mass of "Grilamide (registered trademark)" TR-55 particles (13µm of average particle diameter made from "Grilamide (registered trademark)"-TR55 as raw material) to prepare epoxy resin composition (B). Epoxy resin compound (B) was applied by a knife coater to a mold release paper to prepare resin film (B) having basis weight of 10g/cm³.

Resin films were pressed onto both sides of the fiber reinforced resin sheet prepared in Example 1 to produce fiber reinforced resin sheet (B) by peeling the release mold paper of the film. The fiber reinforced resin sheet had the same level of average basis weight and coefficient of variance as Example 1, while the chopped prepregs of the fiber reinforced resin sheet had the same level of average width Wm, average thickness tm and ratio (Wm/tm) as Example 1. The tensile strength was 0.8MPa as a result of tensile test of fiber reinforced resin sheet (B).

In the processes of cutting and laminating the fiber reinforced resin sheet and conveying the laminate to the mold, the measured load could easily be charged in the mold without falling chopped prepregs off the sheet while fiber reinforced resin sheet (B) was excellent in handling ability because of good bonding between chopped prepregs. In addition, the resin layer formed on the surface layer of the fiber reinforced resin sheet could make the sheet surface keep adhesiveness and make it easy to fix the sheet position in laminating the sheet.

According to observation inside the shaped product made from fiber reinforced resin sheet (B), the shaped product had low void volume fraction of 0.8%. The shaped product had high tensile strength of 320MPa. In the shaped product, thermoplastic particles capable of deforming intervened between layers of the fiber reinforced resin sheet. Accordingly, crack generated inside the material with tensile load can be prevented from transmitting between layers. It seems that the strength is enhanced as such.

### (Comparative example 1)

A fiber reinforced resin sheet and its shaped product were produced by the same method as Example 1, except that the chopped prepreg base material was made from a unidirectional prepreg having cure extent of 0% to omit the process of adjusting the cure extent.

In the process of preparing the chopped prepreg base material, since the prepreg was wrapped over some rotary blades by adhesiveness of prepreg, some parts of continuously fed prepreg were insufficiently chopped without contacting the blade. Further, when the chopped prepregs were dispersed on the support stand, aggregates of prepregs like a ball and chopped prepregs with a tuck inside were observed. The prepared chopped prepregs of fiber reinforced resin sheet had average width Wm of 33.2mm, average thickness tm of 0.19mm and the ratio (Wm/tm) of 175. The fiber reinforced resin sheet had average basis weight of 737g/m² and great coefficient of variance of 36%. It seems that the produced fiber reinforced resin sheet having such a poor uniformity of basis weight was derived from the above-described aggregates of prepregs like a ball or chopped prepregs with a tuck inside.

From the fiber reinforced resin sheet, a flat plate of shaped product was produced by the same method as Example 1. The surface of shaped product was observed to find both a part of luster surface transferred from the mold surface and another part of fiber exposed without contacting the mold. The shaped product had void volume fraction of 4.0% and tensile strength of 184MPa. The fiber reinforced resin sheet had a great variance of basis weight. Therefore, it was difficult to apply uniform pressure to the forming material in the mold, so that defects on the surface and inside of the shaped product were caused as described above.

### (Comparative example 2)

The chopped prepreg base material prepared in Example 1 was evaluated as follows. Although we tried to laminate 270 x 270mm pieces cut out of the base material, the base material containing chopped prepregs which were not bonded to each other collapsed the shape, so that the sheet was found to be inferior in handling ability because a base material laminate was not obtained.

Then, a flat plate of shaped product was produced by the same method as Example 1, except that chopped prepregs of 255g equivalent to the quantity of 5 pieces of the chopped prepreg base material of 270 x 270mm sampled from the chopped prepreg base material was dispersed by hand into the lower forming mold.

The shaped product had partial defects of cavity which were not completely filled in the mold. Further, the shaped flat plate had a great uneven thickness between the maximum thickness of 3.3mm and the minimum thickness of 2.2mm. It seems that such defects are caused because it is difficult that the chopped prepregs are dispersed in the mold so that each part has a uniform basis weight of chopped prepreg in the mold. The tensile strength could not be determined because a shaped product having a uniform thickness was not produced.

### (Comparative example 3)

A fiber reinforced resin sheet was produced by the same method as Example 1, except that the unidirectional prepreg was placed in a hot wind dryer adjusted to 120°C for 20 hours to adjust the cure extent. The cure extent of unidirectional prepreg of which cure extent was adjusted to was 65%. From the unidirectional prepreg of which cure extent was adjusted, although we tried to produce a fiber reinforced resin sheet in the same method as Example 1, the chopped prepregs were not bonded to each other because adhesiveness of the epoxy resin contained in the prepreg was not induced even by heating in the heating section of double belt press. Even though the temperature of the heating section was increased to 130°C, the chopped prepregs were not bonded to each other. Accordingly, a fiber reinforced resin sheet in which chopped prepregs were bonded to each other could not be obtained by this configuration of 65% of cure extent of unidirectional prepreg.

### (Comparative example 4)

The carbon fiber used in Example 1 was chopped with a rotary cutter provided with blades at angle of 90° and 25mm intervals in a circumferential direction so that chopped prepregs having fiber length of 25mm and a linear shape having an end crossing the fiber direction at 90° were prepared.

The chopped prepregs were dispersed onto the resin film used in Example 1 provided at a height 50cm lower than the rotary cutter. Other resin films sandwiched it with resin paste inside to go through the double belt press at the same condition as Example 1, to produce a fiber reinforced resin sheet in which fiber bundles were impregnated with resin. The fiber reinforced resin sheet had average basis weight of 743g/m² and its variance of 33%. As a result of tensile test, the fiber reinforced resin sheet had the tensile strength of 0.5MPa.

From the produced fiber reinforced resin sheet, a flat plate of shaped product was produced by the same method as Example 1. The surface of shaped product was inferior in surface appearance as being observed to find both a part of luster surface transferred from the mold surface and another part of fiber exposed without contacting the mold as well as a plurality of pits having a depth of 0.3 to 0.5mm. The cross section of the shaped product was observed to find unimpregnated parts of resin inside the fiber bundle. The void volume fraction including this unimpregnated parts was 4.7%. The shaped product had tensile strength of 180MPa.

### Explanation of symbols

- 1:: chopped prepreg
- 10:: reinforcing fiber (single yarn)
- 11:: fiber direction
- 12:: end of chopped prepreg
- L:: fiber length
- S:: transition section of chopped prepreg
- C:: center of chopped prepreg
- W:: width of chopped prepreg
- t:: thickness of chopped prepreg

## Claims

1. A fiber reinforced resin sheet, in which chopped prepregs made by chopping a prepreg of reinforcing fibers impregnated with a thermosetting resin having a cure extent of 3% or more and less than 50% are dispersed two-dimensionally and are thermally bonded to each other.

2. The fiber reinforced resin sheet according to claim 1, wherein the reinforcing fibers are oriented in a fiber orientation direction of the chopped prepreg.

3. The fiber reinforced resin sheet according to claim 2, wherein the reinforcing fibers increase continuously toward a center from both ends in the fiber orientation direction in a transition section.

4. The fiber reinforced resin sheet according to claim 2 or 3, wherein the chopped prepreg has a shape to chop the prepreg at an angle of 2 to 30° from the fiber orientation direction.

5. The fiber reinforced resin sheet according to any one of claims 1 to 4, wherein the reinforcing fibers contained in the chopped prepreg have a number average fiber length of 5 mm or more and less than 100 mm.

6. The fiber reinforced resin sheet according to any one of claims 1 to 5, wherein the chopped prepregs are randomly disposed in a plane.

7. The fiber reinforced resin sheet according to any one of claims 1 to 6, wherein the chopped prepreg has 20 to 400 of a ratio (W/t) of a maximum width (W) to a maximum thickness (t).

8. The fiber reinforced resin sheet according to any one of claims 1 to 7, wherein a tensile strength is 0.1 MPa or more.

9. The fiber reinforced resin sheet according to any one of claims 1 to 8, wherein a surface layer is a resin layer having a thickness of 100 µm or more and less than 1,000 µm.

10. The fiber reinforced resin sheet according to claim 9, wherein the resin layer contains the thermosetting resin.

11. The fiber reinforced resin sheet according to any one of claims 1 to 10, wherein an average basis weight is 1,000 g/m² or more and less than 4,000 g/m².

12. The fiber reinforced resin sheet according to any one of claims 1 to 11, wherein a minimum basis weight is 40% or more and less than 100% relative to the average basis weight.

13. The fiber reinforced resin sheet according to any one of claims 1 to 12, wherein the prepreg is a cut-out remnant piece left after cutting shaped products out of a sheet-like prepreg or a recycled material which does not meet a quality standard when the resin of the prepreg is cured.

## Patentansprüche

1. Faserverstärkte Harzfolie, in der geschnittene Prepregs, die durch Schneiden von Prepregs aus Verstärkungsfasern, die mit einem duroplastischen Harz mit einem Härtungsgrad von 3 % oder mehr und weniger als 50 % imprägniert sind, hergestellt sind, zweidimensional dispergiert und thermisch aneinander gebunden sind.

2. Faserverstärkte Harzfolie nach Anspruch 1, wobei die Verstärkungsfasern in einer Faserorientierungsrichtung des geschnittenen Prepregs orientiert sind.

3. Faserverstärkte Harzfolie nach Anspruch 2, wobei die Verstärkungsfasern von beiden Enden in der Faserorientierungsrichtung in einem Übergangsabschnitt kontinuierlich zu einer Mitte hin zunehmen.

4. Faserverstärkte Harzfolie nach Anspruch 2 oder 3, wobei das geschnittene Prepreg eine Form hat, um das Prepreg in einem Winkel von 2 bis 30° von der Faserorientierungsrichtung zu schneiden.

5. Faserverstärkte Harzfolie nach einem der Ansprüche 1 bis 4, wobei die in dem geschnittenen Prepreg enthaltenen Verstärkungsfasern eine zahlenmittlere Faserlänge von 5 mm oder mehr und weniger als 100 mm haben.

6. Faserverstärkte Harzfolie nach einem der Ansprüche 1 bis 5, wobei die geschnittenen Prepregs in einer Ebene zufällig angeordnet sind.

7. Faserverstärkte Harzfolie nach einem der Ansprüche 1 bis 6, wobei das geschnittene Prepreg ein Verhältnis (W/t) von maximaler Breite (W) zu maximaler Dicke (t) von 20 bis 400 hat.

8. Faserverstärkte Harzfolie nach einem der Ansprüche 1 bis 7, wobei die Zugfestigkeit 0,1 MPa oder mehr beträgt.

9. Faserverstärkte Harzfolie nach einem der Ansprüche 1 bis 8, wobei eine Oberflächenschicht eine Harzschicht mit einer Dicke von 100 µm oder mehr und weniger als 1.000 µm ist.

10. Faserverstärkte Harzfolie nach Anspruch 9, wobei die Harzschicht das duroplastische Harz enthält.

11. Faserverstärkte Harzfolie nach einem der Ansprüche 1 bis 10, wobei ein durchschnittliches Flächengewicht 1.000 g/m² oder mehr und weniger als 4.000 g/m² beträgt.

12. Faserverstärkte Harzfolie nach einem der Ansprüche 1 bis 11, wobei ein minimales Flächengewicht 40 % oder mehr und weniger als 100 % bezogen auf das durchschnittliche Flächengewicht beträgt.

13. Faserverstärkte Harzfolie nach einem der Ansprüche 1 bis 12, wobei das Prepreg ein ausgeschnittenes Reststück ist, das nach dem Schneiden geformter Produkte aus einem folienartigen Prepreg oder einem Recyclingmaterial zurückbleibt, das einen Qualitätsstandard nicht erfüllt, wenn das Harz des Prepregs ausgehärtet ist.

## Revendications

1. Feuille de résine renforcée de fibres, dans laquelle des préimprégnés coupés obtenus en coupant un préimprégné de fibres de renforcement imprégnées d'une résine thermodurcissable ayant un degré de durcissement supérieur ou égal à 3% et inférieur à 50% sont dispersés en deux dimensions et sont liés thermiquement les uns aux autres.

2. Feuille de résine renforcée de fibres selon la revendication 1, dans laquelle les fibres de renforcement sont orientées dans une direction d'orientation de fibres du préimprégné coupé.

3. Feuille de résine renforcée de fibres selon la revendication 2, dans laquelle les fibres de renforcement augmentent de manière continue vers un centre à partir des deux extrémités dans la direction d'orientation de fibres dans une section de transition.

4. Feuille de résine renforcée de fibres selon la revendication 2 ou 3, dans laquelle le préimprégné coupé a une forme permettant de couper le préimprégné selon un angle compris entre 2 et 30° par rapport à la direction d'orientation de fibres.

5. Feuille de résine renforcée de fibres selon l'une quelconque des revendications 1 à 4, dans laquelle les fibres de renforcement contenues dans le préimprégné coupé ont une longueur de fibre moyenne en nombre supérieure ou égale à 5 mm et inférieure à 100 mm.

6. Feuille de résine renforcée de fibres selon l'une quelconque des revendications 1 à 5, dans laquelle les préimprégnés coupés sont disposés de manière aléatoire dans un plan.

7. Feuille de résine renforcée de fibres selon l'une quelconque des revendications 1 à 6, dans laquelle le préimprégné coupé a un rapport (W/t) allant de 20 à 400 d'une largeur maximale (W) sur une épaisseur maximale (t).

8. Feuille de résine renforcée de fibres selon l'une quelconque des revendications 1 à 7, dans laquelle une résistance à la traction est supérieure ou égale à 0,1 MPa.

9. Feuille de résine renforcée de fibres selon l'une quelconque des revendications 1 à 8, dans laquelle une couche de surface est une couche de résine ayant une épaisseur supérieure ou égale à 100 µm et inférieure à 1000 µm.

10. Feuille de résine renforcée de fibres selon la revendication 9, dans laquelle la couche de résine contient la résine thermodurcissable.

11. Feuille de résine renforcée de fibres selon l'une quelconque des revendications 1 à 10, dans laquelle une masse surfacique moyenne est supérieure ou égale à 1000 g/m² et inférieure à 4000 g/m².

12. Feuille de résine renforcée de fibres selon l'une quelconque des revendications 1 à 11, dans laquelle une masse surfacique minimale est supérieure ou égale à 40% et inférieure à 100% par rapport à la masse surfacique moyenne.

13. Feuille de résine renforcée de fibres selon l'une quelconque des revendications 1 à 12, dans laquelle le préimprégné est un morceau de reste découpé laissé après la coupe de produits façonnés à partir d'un préimprégné en forme de feuille ou d'un matériau recyclé qui ne répond pas à une norme de qualité lorsque la résine du préimprégné est durcie.
